Europäisches Patentamt

(19) European Patent Office

Office européen des brevets

(11) **EP 0 912 628 B1**

(12) **EUROPÄISCHE PATENTSCHRIFT**

(45) Veröffentlichungstag und Bekanntmachung des Hinweises auf die Patenterteilung:
**03.11.2004 Patentblatt 2004/45**

(51) Int Cl.[7]: **C08J 5/18**, B29C 55/08, B29D 7/01 // C08L1:02

(21) Anmeldenummer: **98916620.2**

(22) Anmeldetag: **24.04.1998**

(86) Internationale Anmeldenummer:
**PCT/AT1998/000109**

(87) Internationale Veröffentlichungsnummer:
**WO 1998/049224 (05.11.1998 Gazette 1998/44)**

(54) **VERFAHREN ZUR HERSTELLUNG CELLULOSISCHER FORMKÖRPER**

METHOD FOR PRODUCING CELLULOSIC FORMED PARTS

PROCEDE DE PRODUCTION DE CORPS MOULES CELLULOSIQUES

(84) Benannte Vertragsstaaten:
**AT BE CH DE DK ES FI FR GB GR IE IT LI LU MC NL PT SE**

(30) Priorität: **25.04.1997 AT 70597**
**23.10.1997 AT 179797**

(43) Veröffentlichungstag der Anmeldung:
**06.05.1999 Patentblatt 1999/18**

(73) Patentinhaber: **LENZING AKTIENGESELLSCHAFT**
**4860 Lenzing (AT)**

(72) Erfinder:
• **SCHLOSSNIKL, Christian**
**A-4840 Vöcklabruck (AT)**
• **GSPALTI, Peter**
**A-8071 Grambach (AT)**
• **KALLEITNER, Johann**
**A-4861 Schörfling (AT)**
• **RIEDL, Gerold**
**A-4870 Pfaffing (AT)**
• **SCHWEIGART, Andreas**
**A-4880 St. Georgen (AT)**

(74) Vertreter: **Schwarz, Albin, Dr. et al**
**Kopecky & Schwarz**
**Patentanwälte**
**Wipplingerstrasse 32/22**
**1010 Wien (AT)**

(56) Entgegenhaltungen:
EP-A- 0 574 870          WO-A-95/35340
WO-A-96/34037          WO-A-97/24215
WO-A-97/37392          WO-A-98/49223

**Beschreibung**

Die vorliegende Erfindung betrifft ein Verfahren zur Herstellung cellulosischer Formkörper, insbesondere cellulosischer Flachfolien und cellulosischer Membranen in Form von Flachmembranen, wobei eine Lösung von Cellulose in einem wässerigen tertiären Aminoxid mittels einer Extrusionsdüse, die einen länglichen Extrusionsspalt aufweist, folienartig ausgeformt und durch einen Luftspalt in ein Fällbad geführt wird, wobei im Fällbad die cellulosische Flachfolie gebildet wird.

Aus der US-A-2 179 181 ist bekannt, daß tertiäre Aminoxide Cellulose zu lösen vermögen und daß aus diesen Lösungen durch Fällung cellulosische Formkörper wie Fasern gewonnen werden können. Ein Verfahren zur Herstellung derartiger Lösungen ist beispielsweise aus der EP-A-0 356 419 bekannt. Gemäß dieser Veröffentlichung wird zunächst eine Suspension von Cellulose in einem wässerigen tertiären Aminoxid bereitet. Das Aminoxid enthält bis zu 40 Masse% Wasser. Die wässerige Cellulosesuspension wird in einem Dünnschichtbehandlungsapparat in die Lösung übergeführt.

Aus der DE-A-28 44 163 ist bekannt, zur Herstellung von Cellulosefasern zwischen Spinndüse und Fällbad einen Luftspalt zu legen, um einen Düsenverzug zu ermöglichen. Dieser Düsenverzug ist notwendig, da nach Kontakt der geformten Spinnlösung mit dem wässerigen Fällbad eine Reckung der Fäden sehr erschwert wird. Im Fällbad wird die im Luftspalt eingestellte Faserstruktur fixiert.

Ein Verfahren zur Herstellung cellulosischer Fäden ist weiters aus der DE-A-28 30 685 bekannt, wonach eine Lösung von Cellulose in einem tertiären Aminoxid in warmem Zustand zu Filamenten geformt wird, die Filamente mit Luft abgekühlt und anschließend in ein Fällbad eingebracht werden, um die gelöste Cellulose zu fällen. Die Oberfläche der versponnenen Fäden wird weiters mit Wasser benetzt, um ihre Neigung, an benachbarten Fäden anzukleben, zu vermindern.

Aus der DE-A- 195 15 137 ist ein Verfahren zur Herstellung von Flachfolien bekannt, wobei mittels einer Ringdüse zunächst eine Schlauchfolie hergestellt wird, die nach Waschen und Trocknen zu Flachfolien aufgeschnitten wird. Bei der Herstellung der Schlauchfolie wird der extrudierte Schlauch im Luftspalt nicht nur in Abzugsrichtung verstreckt, sondern auch in Querrichtung aufgedehnt. Dies geschieht durch einen im Inneren des Schlauches wirksamen Gasdruck. Die Nachteile dieses Verfahrens bestehen im komplizierten Aufbau der zu verwendenden Vorrichtung sowie im Wasch- und Trocknungsprozeß, der bei Schlauchfolien aufwendiger ist als bei Flachfolien.

Verfahren zur Herstellung cellulosischer Schlauchfolien sind ferner auch aus der US-A-5 277 857 und aus der EP-A-0 662 283 bekannt. Gemäß diesen bekannten Verfahren wird eine Celluloselösung durch eine Extrusionsdüse mit ringförmigem Extrusionsspalt zu einem Schlauch geformt, der über einen zylindrischen Dom gezogen und in ein Fällbad eingebracht wird. Damit der extrudierte Schlauch nicht an der Dornoberfläche haften bleibt, wird seine Oberfläche mit einem Wasserfilm überzogen, sodaß die Innenseite des Schlauches koaguliert und über den zylindrischen Dom gleitet. Gemäß der EP-A-0 662 283 wird die Schlauchfolie nach Waschen durch Einblasen eines Gases aufgedehnt.

Die DE-C-44 21 482 beschreibt ein Blasverfahren zur Herstellung orientierter cellulosischer Folien, wobei die Celluloselösung über eine Filmblasdüse und einen Luftspalt nach unten in ein Fällbad extrudiert wird. Es wird erwähnt, daß über den Gasdruck im Inneren der Blasfolie eine Verstreckung quer zur Transportrichtung der Blasfolie erzielt werden kann und daß das Verhältnis von mechanischen Längs- und Quereigenschaften eingestellt werden kann.

Ein Verfahren und eine Vorrichtung zur Herstellung cellulosischer Folien, insbesondere von Schlauchfolien, ist auch aus der WO-A-95/07811 der Anmelderin bekannt. Hierbei wird die gelöste Cellulose vor dem Einbringen in das Fällbad gekühlt, indem die erhitzte Lösung unmittelbar nach dem Extrudieren einem Gasstrom ausgesetzt wird.

Aus der WO-A-97/24215 ist ein Verfahren zur Herstellung eines orientierten cellulosischen Films bekannt, bei dem eine cellulosische Lösung auf eine dehnbare Oberfläche aufgebracht wird, auf der die Lösung anhaftet, die Lösung anschließend durch Strecken der dehnbaren Oberfläche verstreckt und schließlich gefällt wird.

Aus der EP-B-0 494 851 der Anmelderin ist ein Verfahren zur Herstellung einer cellulosischen Flachfolie bekannt, bei dem eine cellulosische Lösung durch eine Düse oder einen Spalt gepreßt wird, anschließend durch einen Luftspalt geführt und schließlich in einem Fällbad koaguliert wird und die koagulierte Flachfolie längsverstreckt wird.

Bei cellulosischen Membranen insbesondere in Form von Flachmembranen, d.h. Membranen aus einer Flachfolie, ist die Permeabilität der Membranen eine wesentliche Eigenschaft. Zur Lösung bestimmter Trennaufgaben ist es wichtig, Membranen mit jeweils für die Trennaufgabe optimierter Permeabilität, Porengröße und Porenstruktur auszuwählen.

Dialysemembranen aus regenerierter Cellulose in Form von Flachfolien, Schlauchfolien oder Hohlfäden sind seit längerem bekannt, wobei die Regeneration der Cellulose nach dem Cuoxam-Verfahren, nach dem Viscose-Verfahren oder durch Hydrolyse von Celluloseacetat erfolgen kann. Je nach dem angewendeten Verfahren und den Verfahrensbedingungen erhält man Membranen mit unterschiedlichen Dialyseeigenschaften.

Die US- 4,354,938 beschreibt z.B. ein Verfahren für die Herstellung von Dialysemembranen nach dem Viskose-Verfahren, bei dem eine schlauchförmig ausgeformte Membran vor dem Trocknen in Querrichtung durch Aufblasen mit Luft um zwischen 40 und 120 % verstreckt wird, was zu einer Membran mit einer in Längs- und Querrichtung gleichmäßigen Orientierung führt. Beim Überführen der getrockneten Membranen in den nassßen Zustand unterliegen die so dargestellten Membranen einem Schrumpf in Längs- und Querrichtung von 0,5 - 10 %. Die Ultrafiltrationsleistungen liegen im Bereich zw. 2,5 ml/m$^2$.h.mm Hg und 5,2 ml/m$^2$.h.mm Hg bei einer Naßdicke von 184 µm bis 45 µm.

In "Membranen und Membranprozesse" von E. Staude, 1992, VCH Verlagsges.m.b.H. wird auf S. 19 beschrieben, daß ein biaxiales Recken von fertigen Cellophan-Membranen zur Vergrößerung der Poren, ein monoaxiales Recken hingegen zur Reduzierung des effektiven Porendurchmessers führt.

Das Viskoseverfahren bietet jedoch nur begrenzte Möglichkeiten Membraneigenschaften gezielt einzustellen. Ferner ist die Rückgewinnung der bei diesem Prozeß anfallenden Chemikalien wie Natriumsulfat und Schwefelkohlenstoff usw. sehr aufwendig.

Die vorliegende Erfindung stellt sich die Aufgabe, ein Verfahren zur Herstellung cellulosischer Flachfolien mit verbesserten mechanischen Eigenschaften zur Verfügung zu stellen. Es ist weiters Aufgabe der Erfindung, ein Verfahren zur Herstellung cellulosischer Membranen in Form von Flachmembranen zur Verfügung zu stellen, durch welches Membranen mit für die jeweils zu lösende Trennaufgabe optimierter Permeabilität erhalten werden können.

Diese Aufgabe wird bei einem Verfahren zur Herstellung cellulosischer Flachfolien und cellulosischer Membranen in Form von Flachmembranen, bei welchem eine Lösung von Cellulose in einem wässerigen tertiären Aminoxid mittels einer Extrusionsdüse, die einen länglichen Extrusionsspalt mit einer Länge von mindestens 40 cm aufweist, folienartig ausgeformt und durch einen Luftspalt in ein Fällbad geführt wird, wobei im Fällbad die cellulosische Flachfolie gebildet wird, erfindungsgemäß dadurch gelöst, daß die cellulosische Flachfolie nach dem Eintritt in das Fällbad querverstreckt wird. Das Querverstrecken kann dabei im Fällbad oder erst zu einem späteren Zeitpunkt erfolgen. Unter Querverstrecken wird hierbei verstanden, daß ein Verstreck in Richtung der Breite der cellulosischen Flachfolie erfolgt.

Es ist bekannt, daß nach dem Viskoseverfahren hergestellte Cellulosefolien nach dem Fällen kaum mehr verformbar sind und sich nur in geringem Ausmaß querverstrecken lassen. Überraschenderweise hat sich erfindungsgemäß gezeigt, daß im Fall von Folien, die nach dem Aminoxid-Verfahren gemäß dem Oberbegriff des Anspruchs 1 hergestellt werden, das Querverstrecken auch nach dem Fällen der folienartig ausgeformten Lösung von Cellulose möglich ist. Hierdurch werden cellulosische Flachfolien mit verbesserten mechanischen Eigenschaften erhalten. Ein aufwendiges Aufblasen einer schlauchartig ausgeformten cellulosischen Lösung im Luftspalt ist hierbei nicht erforderlich.

Das Querverstrecken der Folien kann nach bekannten Methoden, wie sie beispielsweise bei thermoplastischen Folien angewendet werden (wie z.B. im Handbuch der Kunststoffextrusionstechnik, II, Extrusionsanlagen, Hanser-Verlag, 1986, 261-269, beschrieben), etwa durch Förderbänder oder an endlosen Bändern bzw. Ketten angebrachte Klemmvorrichtungen dadurch erreicht werden, daß die Bänder in divergierende Richtung geführt werden.

Nach einer bevorzugten Ausführungsform des erfindungsgemäßen Verfahrens wird die cellulosische Flachfolie im Luftspalt längsverstreckt, vorzugsweise in einem Bereich von 0,2 bis 5-fach.

Eine weitere vorteilhafte Ausgestaltung des erfindungsgemäßen Verfahrens ist dadurch gekennzeichnet, daß die cellulosische Flachfolie nach dem Fällen zunächst gewaschen und erst nach dem Waschen verstreckt wird.

Es hat sich überraschenderweise gezeigt, daß sich nach dem erfindungsgemäßen Verfahren hergestellte cellulosische Flachfolien im gewaschenen Zustand bis zum 3,5-fachen ihrer ursprünglichen Breite in Querrichtung verstrecken lassen.

Nach einer weiteren bevorzugten Ausführungsform des erfindungsgemäßen Verfahrens wird die cellulosische Flachfolie nach dem Fällen zunächst gewaschen und getrocknet, wonach die trockene cellulosische Flachfolie, vorzugsweise durch Besprühen mit Wasser, befeuchtet und verstreckt wird. Überraschenderweise hat sich gezeigt, daß sich auch solchermaßen behandelte cellulosische Flachfolien bis zum 3,5-fachen ihrer ursprünglichen Breite in Querrichtung verstrecken lassen.

Das erfindungsgemäße Verfahren zeichnet sich dadurch aus, daß durch Querverstrecken der cellulosischen Flachfolie bis zum 3,5-fachen der ursprünglichen Breite die mechanischen Eigenschaften der Folie in Längs- und Querrichtung in einem weiten Bereich eingestellt werden können.

Vorzugsweise wird als tertiäres Aminoxid N-Methylmorpholin-N-oxid (NMMO) eingesetzt.

Die oben beschriebenen Vorteile des erfindungsgemäßen Verfahrens gelten insbesondere auch für eine erfindungsgemäße Herstellung von cellulosischen Membranen in Form von Flachmembranen.

Dabei läßt sich die Permeabilität der Membran und damit auch ihre Ultrafiltrationsrate (UFR) insbesondere durch die Wahl der Geschwindigkeit, mit der die folienartig ausgeformte Lösung im Luftspalt abgezogen wird, beeinflussen. Es zeigt sich dabei, daß eine geringere Abzugsgeschwindigkeit die Permeabilität und damit auch die Ultrafiltrationsrate der Membran erhöht. Hingegen wird durch eine Querverstreckung der Folie nach dem Eintritt in das Fällbad die Permeabilität der Membran erhöht. Es sind somit wesentliche Membraneigenschaften durch die Wahl der Abzugsgeschwindigkeit sowie die Querverstreckung der Folie steuerbar.

Die Erfindung betrifft auch die Verwendung einer nach dem erfindungsgemäßen Verfahren hergestellten cellulosischen Flachfolie als Verpackungsmaterial, insbesondere für Lebensmittel, als Material für Müllsäcke und Tragtaschen, als Agrarfolie, als Windelfolie, als Substrat für Verbunde, als Bürofolie, als Haushaltsfolie oder als Membran zur Auftrennung von Substanzgemischen.

Mit den nachfolgenden Beispielen wird die Erfindung noch näher erläutert. Die eingesetzten Celluloselösungen wurden nach dem in der EP-A-0 356 419 beschriebenen Verfahren hergestellt. In allen Beispielen wurden die Folien nach Fällung der Cellulose gewaschen und mit Glycerin behandelt (Glyceringehalt der getrockneten Folie etwa 15 Masse%) und anschließend in einem Spannrahmen, in welchem die Folien längs und quer fixiert wurden, getrocknet. Die in den Beispielen angeführten Eigenschaften wurden an den getrockneten Folien bestimmt, wobei die Festigkeit (längs und quer) und die Längs- und Querdehnung nach DIN. 53457 bestimmt wurden.

Die in den Beispielen angegebene Ultrafiltrationsrate ist definiert als das pro Zeiteinheit durch die Membranwand durchtretende Permeatvolumen bezogen auf die Membranfläche und den Prüfdruck.

$$UFR = \frac{V}{t.A. \, p} \quad \frac{ml}{h.m^2.mmHg}$$

V = Flüssigkeitsvolumen (Permeat) [ml]
t = Zeit [h]
A = Membranfläche [m$^2$]
p = Prüfdruck [mm Hg]

Die angegebenen diffusen Permeabilitäten ergeben sich durch Auftragen von $\ln(c_t/c_0)$ gegen die Zeit aus der Steigung der Geraden.

$$\ln=\frac{c_t}{c_0} = -\frac{A}{V}. \, P_{diff}.t$$

$c_o$ = Anfangskonzentration
$c_t$ = Konzentration zur Zeit t
A = Membranfläche [cm$^2$]
V = Dialysevolumen [cm$^3$]
$P_{diff.}$ = diffuse Permeabilität [cm/min]
t = Zeit [min]

Zum direkten Vergleich der unterschiedlichen Membranen wurden alle Permeabilitäten auf eine Naßdicke von 75 µm umgerechnet, d.h. daß die entsprechenden Zeiten bis zum Erreichen des Gleichgewichtszustandes auf diese Dicke normiert wurden. Wurde beispielsweise mit einer 200 µm dicken Membran der Gleichgewichtszustand der NaCl-Dialyse nach 100 Stunden erreicht so entspricht das für eine 75 µm dicke Membran einer Zeit von 100 x 75/200 = 37,5 Stunden.

Beispiel 1 (Vergleich)

Eine Celluloselösung mit einer Temperatur von 85° C, enthaltend 15,5 Masse% Cellulose, 74,5 Masse% NMMO und 10,0 Masse% Wasser, wurde mittels einer länglichen Extrusionsdüse, welche einen. Extrusionsspalt mit einer Länge von 40 cm und einer Breite von 300 µm aufwies, mit einem Durchsatz von 37,8 kg/h durch einen Luftspalt von 20 mm in ein Fällbad, bestehend aus 80 Masse% NMMO und 20 Masse% Wasser, extrudiert.

Die folienartig ausgeformte Celluloselösung trat aus der Düse mit einer Austrittsgeschwindigkeit von 4,2 m/min aus und wurde mit dem Dreifachen der Austrittsgeschwindigkeit abgezogen.

Die erhaltene Flachfolie wies folgende Eigenschaften auf:

| | |
|---|---|
| Dicke | 32 µm |
| Festigkeit (längs) | 177,1 N/mm$^2$ |
| Festigkeit (quer) | 62,3 N/mm$^2$ |
| Längsdehnung | 15,6 % |
| Querdehnung | 114,0 % |
| UFR | 3,5 ml/mm$^2$.h.mm Hg |
| $P_{diff}$ NaOH | 2,5.10$^{-3}$ cm/min |
| $P_{diff}$ NaCl | 1,7.10$^{-3}$ cm/min |

Beispiel 2

Es wurde wie in Beispiel 1 vorgegangen, außer daß die Flachfolie vor dem Trocknen im Spannrahmen um 50 % in Querrichtung verstreckt wurde.

Die erhaltene Flachfolie wies folgende Eigenschaften auf:

| | |
|---|---|
| Dicke | 21 µm |
| Festigkeit (längs) | 194,0 N/mm$^2$ |
| Festigkeit (quer) | 78,8 N/mm$^2$ |
| Längsdehnung | 17,5% |
| Querdehnung | 70,3 % |
| UFR | 4,5 ml/mm$^2$.h.mm Hg |
| $P_{diff}$NaOH | 2,6.10$^{-3}$ cm/min |
| $P_{diff}$NaCl | 2,3.10$^{-3}$ cm/min |

Beispiel 3

Es wurde wie in Beispiel 1 vorgegangen, außer daß die Flachfolie vor dem Trocknen im Spannrahmen um 75 % in Querrichtung verstreckt wurde.

Die erhaltene Flachfolie wies folgende Eigenschaften auf:

| | |
|---|---|
| Dicke | 18 µm |

(fortgesetzt)

| | |
|---|---|
| Festigkeit (längs) | 177,3 N/mm$^2$ |
| Festigkeit (quer) | 88,1 N/mm$^2$ |
| Längsdehnung | 17,5% |
| Querdehnung | 52,6 % |
| UFR | 4,5 ml/mm$^2$.h.mm Hg |
| $P_{diff}$NaOH | $2,8.10^{-3}$ cm/min |
| $P_{diff}$NaCl | $2,5.10^{-3}$ cm/min |

Beispiel 4

Es wurde wie in Beispiel 1 vorgegangen, außer daß die Flachfolie vor dem Trocknen im Spannrahmen um 100 % in Querrichtung verstreckt wurde.

Die erhaltene Flachfolie wies folgende Eigenschaften auf:

| | |
|---|---|
| Dicke | 16 µm |
| Festigkeit (längs) | 181,5 N/mm$^2$ |
| Festigkeit (quer) | 114,7 N/mm$^2$ |
| Längsdehnung | 17,1 % |
| Querdehnung | 37,2 % |
| UFR | 5,1 ml/mm$^2$.h.mm Hg |
| $P_{diff}$NaOH | $3,2.10^{-3}$ cm/min |
| $P_{diff}$ NaCl | $2,9.10^{-3}$ cm/min |

Beispiel 5

Es wurde wie in Beispiel 1 vorgegangen, außer daß die Flachfolie vor dem Trocknen im Spannrahmen um 125 % in Querrichtung verstreckt wurde.

Die erhaltene Flachfolie wies folgende Eigenschaften auf:

| | |
|---|---|
| Dicke | 14 µm |
| Festigkeit (längs) | 182,8 N/mm$^2$ |
| Festigkeit (quer) | 122,7 N/mm$^2$ |
| Längsdehnung | 20,0 % |
| Querdehnung | 36,8 % |
| UFR | 5,3 ml/mm$^2$.h.mm Hg |
| $P_{diff}$ NaOH | $3,1.10^{-3}$ cm/min |
| $P_{diff}$ NaCl | $2,8.10^{-3}$ cm/min |

Beispiel 6

Es wurde wie in Beispiel 1 vorgegangen, außer daß die Flachfolie vor dem Trocknen im Spannrahmen um 175 % in Querrichtung verstreckt wurde.

Die erhaltene Flachfolie wies folgende Eigenschaften auf:

| | |
|---|---|
| Dicke | 12 µm |
| Festigkeit (längs) | 138,0 N/mm$^2$ |

(fortgesetzt)

| | |
|---|---|
| Festigkeit (quer) | 131,5 N/mm$^2$ |
| Längsdehnung | 13,9% |
| Querdehnung | 27,9 % |
| UFR | 5,5 ml/mn$^2$.h.mm Hg |
| $P_{diff}$ NaOH | $3,1.10^{-3}$ cm/min |
| $P_{diff}$ NaCl | $3,1.10^{-3}$ cm/min |

Beispiel 7 (Vergleich)

Eine Celluloselösung mit einer Temperatur von 110° C, enthaltend 15,0 Masse% Cellulose, 74,5 Masse% NMMO und 10,5 Masse% Wasser, wurde mittels einer länglichen Extrusionsdüse, welche einen Extrusionsspalt mit einer Länge von 40 cm und einer Breite von 300 µm aufwies, mit einem Durchsatz von 37,8 kg/h durch einen Luftspalt von 20 mm in ein Fällbad, bestehend aus 80 Masse% NMMO und 20 Masse% Wasser, extrudiert.

Die folienartig ausgeformte Celluloselösung trat aus der Düse mit einer Austrittsgeschwindigkeit von 4,2 m/min aus und wurde mit der gleichen Geschwindigkeit abgezogen. Dies bedeutet, daß die Flachfolie im Luftspalt nicht in Längsrichtung verstreckt wurde.

Die erhaltene Flachfolie wies folgende Eigenschaften auf:

| | |
|---|---|
| Dicke | 71 µm |
| Festigkeit (längs) | 190,6 N/mm$^2$ |
| Festigkeit (quer) | 107,2 N/mm$^2$ |
| Längsdehnung | 19,9% |
| Querdehnung | 70,3 % |
| UFR | 5,6 ml/mm$^2$.h.mm Hg |
| $P_{diff}$ NaOH | $5,2.10^{-3}$ cm/min |
| $P_{diff}$ NaCl | $4,3.10^{-3}$ cm/min |

Beispiel 8

Es wurde wie in Beispiel 7 vorgegangen, außer daß die Flachfolie vor dem Trocknen im Spannrahmen um 100 % in Querrichtung verstreckt wurde.

Die erhaltene Flachfolie wies folgende Eigenschaften auf:

| | |
|---|---|
| Dicke | 36 µm |
| Festigkeit (längs) | 185,0 N/mm$^2$ |
| Festigkeit (quer) | 169,1 N/mm$^2$ |
| Längsdehnung | 26,6 % |
| Querdehnung | 29,2 % |
| UFR | 5,9 ml/mm$^2$.h.mm Hg |
| $P_{diff}$ NaOH | $5,7.10^{-3}$ cm/min |
| $P_{diff}$ NaCl | $4,6.10^{-3}$ cm/min |

Beispiel 9

Es wurde wie in Beispiel 7 vorgegangen, außer daß die Flachfolie vor dem Trocknen im Spannrahmen um 200 % in Querrichtung verstreckt wurde.

Die erhaltene Flachfolie wies folgende Eigenschaften auf:

| | |
|---|---|
| Dicke | 24 µm |
| Festigkeit (längs) | 139,6 N/mm$^2$ |
| Festigkeit (quer) | 179,3 N/mm$^2$ |
| Längsdehnung | 36,2 % |
| Querdehnung | 20,0 % |
| UFR | 6,2 ml/mm$^2$.h.mm Hg |
| $P_{diff}$NaOH | 5,9.10$^{-3}$ cm/min |
| $P_{diff}$ NaCl | 5,0.10$^{-3}$ cm/min |

Beispiel 10 (Vergleich)

Eine Celluloselösung mit einer Temperatur von 85° C, enthaltend 15,5 Masse% Cellulose, 74,5 Masse% NMMO und 10,0 Masse% Wasser, wurde mittels einer länglichen Extrusionsdüse, welche einen Extrusionsspalt mit einer Länge von 40 cm und einer Breite von 300 µm aufwies, mit einem Durchsatz von 37,8 kg/h durch einen Luftspalt von 20 mm in ein Fällbad, bestehend aus 80 Masse% NMMO und 20 Masse% Wasser, extrudiert.

Die folienartig ausgeformte Celluloselösung trat aus der Düse mit einer Austrittsgeschwindigkeit von 4,2 m/min aus und wurde mit der gleichen Geschwindigkeit abgezogen. Dies bedeutet, daß die Flachfolie im Luftspalt nicht in Längsrichtung verstreckt wurde.

Die erhaltene Flachfolie wies folgende Eigenschaften auf:

| | |
|---|---|
| Dicke | 67 µm |
| Festigkeit (längs) | 224,1 N/mm$^2$ |
| Festigkeit (quer) | 165,1 N/mm$^2$ |
| Längsdehnung | 25,6 % |
| Querdehnung | 54,3 % |
| UFR | 5,5 ml/mm$^2$.h.mm Hg |
| $P_{diff}$NaOH | 5,2.10$^{-3}$ cm/min |
| $P_{diff}$ NaCl | 4,2.10$^{-3}$ cm/min |

Beispiel 11

Es wurde wie in Beispiel 10 vorgegangen, außer daß die Flachfolie nach dem Trocknen im Spannrahmen wieder befeuchtet und im Spannrahmen um 100 % in Querrichtung verstreckt wurde.

Die erhaltene Flachfolie wies im trockenen Zustand folgende Eigenschaften auf:

| | |
|---|---|
| Dicke | 34 µm |

(fortgesetzt)

| | |
|---|---|
| Festigkeit (längs) | 171,1 N/mm$^2$ |
| Festigkeit (quer) | 171,9 N/mm$^2$ |
| Längsdehnung | 36,6 % |
| Querdehnung | 40,1% |
| UFR | 5,8 ml/mm$^2$.h.mm Hg |
| $P_{diff}$NaOH | 5,9.10$^{-3}$ cm/min |
| $P_{diff}$ NaCl | 4,4.10$^{-3}$ cm/min |

Beispiel 12

Es wurde wie in Beispiel 10 vorgegangen, außer daß die Flachfolie nach dem Trocknen im Spannrahmen wieder befeuchtet und im Spannrahmen um 200 % in Querrichtung verstreckt wurde.

Die erhaltene Flachfolie wies im trockenen Zustand folgende Eigenschaften auf:

| | |
|---|---|
| Dicke | 22 µm |
| Festigkeit (längs) | 132,2 N/mm$^2$ |
| Festigkeit (quer) | 190,5 N/mm$^2$ |
| Längsdehnung | 34,4 % |
| Querdehnung | 31,8 % |
| UFR | 6,0 ml/mm$^2$.h.mm Hg |
| $P_{diff}$ NaOH | 5,6.10$^{-3}$ cm/min |
| $P_{diff}$ NaCl | 4,9.10$^{-3}$ cm/min |

Beispiel 13

Eine Celluloselösung mit einer Temperatur von 85° C, enthaltend 15,0 Masse% Cellulose, 74,5 Masse% NMMO und 10,5 Masse% Wasser, wurde mittels einer länglichen Extrusionsdüse, welche einen Extrusionsspalt mit einer Länge von 40 cm und einer Breite von 300 µm aufwies, mit einem Durchsatz von 37,8 kg/h durch einen Luftspalt von 20 mm in ein Fällbad, bestehend aus 80 Masse% NMMO und 20 Masse% Wasser, extrudiert.

Die folienartig ausgeformte Celluloselösung trat aus der Düse mit einer Austrittsgeschwindigkeit von 4,2 m/min aus und wurde mit der gleichen Geschwindigkeit abgezogen. Dies bedeutet, daß die Flachfolie im Luftspalt nicht in Längsrichtung verstreckt wurde.

Die trockene Flachfolie wurde für 2 min in Wasser getaucht und anschließend im Spannrahmen um 25 % in Querrichtung verstreckt.

Die erhaltene Flachfolie wies im trockenen Zustand folgende Eigenschaften auf:

| | |
|---|---|
| Dicke | 49 µm |
| Festigkeit (längs) | 266,6 N/mm$^2$ |
| Festigkeit (quer) | 163,1 N/mm$^2$ |
| Längsdehnung | 20,2 % |
| Querdehnung | 61,3% |

(fortgesetzt)

| | |
|---|---|
| UFR | 5,5 ml/mm$^2$.h.mm Hg |
| $P_{diff}$ NaOH | 5,3.10$^{-3}$ cm/min |
| $P_{diff}$ NaCl | 4,2.10$^{-3}$ cm/min |

Beispiel 14

Es wurde wie in Beispiel 13 vorgegangen, außer daß die ins Wasser getauchte Flachfolie im Spannrahmen um 75 % in Querrichtung verstreckt wurde.

Die erhaltene Flachfolie wies im trockenen Zustand folgende Eigenschaften auf:

| | |
|---|---|
| Dicke | 37 µm |
| Festigkeit (längs) | 244,4 N/mm$^2$ |
| Festigkeit (quer) | 195,5 N/mm$^2$ |
| Längsdehnung | 24,9 % |
| Querdehnung | 37,5% |
| UFR | 5,6 ml/mm$^2$.h.mm Hg |
| $P_{diff}$ NaOH | 5,3.10$^{-3}$ cm/min |
| $P_{diff}$ NaCl | 4,3.10$^{-3}$ cm/min |

Beispiel 15

Es wurde wie in Beispiel 13 vorgegangen, außer daß die ins Wasser getauchte Flachfolie im Spannrahmen um 100 % in Querrichtung verstreckt wurde.

Die erhaltene Flachfolie wies im trockenen Zustand folgende Eigenschaften auf:

| | |
|---|---|
| Dicke | 32 µm |
| Festigkeit (längs) | 235,8 N/mm$^2$ |
| Festigkeit (quer) | 232,9 N/mm$^2$ |
| Längsdehnung | 26,9 % |
| Querdehnung | 35,1 % |
| UFR | 5,8 ml/mm$^2$.h.mm Hg |
| $P_{diff}$ NaOH | 5,7.10$^{-3}$ cm/min |
| $P_{diff}$ NaCl | 4,5.10$^{-3}$ cm/min |

Beispiel 16

Es wurde wie in Beispiel 13 vorgegangen, außer daß die ins Wasser getauchte Flachfolie im Spannrahmen um 250 % in Querrichtung verstreckt wurde.

Die erhaltene Flachfolie wies im trockenen Zustand folgende Eigenschaften auf:

| | |
|---|---|
| Dicke | 18 µm |
| Festigkeit (längs) | 187,6 N/mm$^2$ |
| Festigkeit (quer) | 265,2 N/mm$^2$ |
| Längsdehnung | 38,0 % |
| Querdehnung | 31,1 % |
| UFR | 6,3 ml/mm$^2$.h.mm Hg |

(fortgesetzt)

| | |
|---|---|
| $P_{diff}$ NaOH | 6.10$^{-3}$ cm/min |
| $P_{diff}$ NaCl | 5,2.10$^{-3}$ cm/min |

Beispiel 17 (Vergleich)

Eine nach dem Viskoseverfahren hergestellte Cellophanfolie wurde befeuchtet und im Spannrahmen ohne Verstreckung getrocknet.

Die erhaltene Folie wies im trockenen Zustand folgende Eigenschaften auf:

| | |
|---|---|
| Dicke | 30 µm |
| Festigkeit (längs) | 176,1 N/mm$^2$ |
| Festigkeit (quer) | 81,9 N/mm$^2$ |
| Längsdehnung | 13,8% |
| Querdehnung | 31,8 % |

Beispiel 18 (Vergleich)

Eine nach dem Viskoseverfahren hergestellte Cellophanfolie wurde befeuchtet und im Spannrahmen um 50 % in Querrichtung verstreckt. Es konnte bei Cellophanfolien in keinem Fall eine höhere Querverstreckung als 50 % erreicht werden, ohne daß die Folie riß.

Die erhaltene Folie wies im trockenen Zustand folgende Eigenschaften auf:

| | |
|---|---|
| Dicke | 21 µm |
| Festigkeit (längs) | 159,0 N/mm$^2$ |
| Festigkeit (quer) | 113,1 N/mm$^2$ |
| Längsdehnung | 12,8% |
| Querdehnung | 19,7 % |

Beispiel 19

Eine Celluloselösung mit einer Temperatur von 110° C, enthaltend 14,2 Masse% Cellulose, 76,2 Masse% NMMO und 9,6 Masse% Wasser, wurde mittels einer länglichen Extrusionsdüse, welche einen Extrusionsspalt mit einer Länge von 40 cm und einer Breite von 500 µm aufwies, mit einem Durchsatz von 75,6 kg/h durch einen Luftspalt von 3 cm senkrecht nach unten in ein Fällbad, bestehend aus 98 Masse% Wasser und 2 Masse% NMMO, extrudiert.

Die folienartig ausgeformte Celluloselösung trat aus der Düse mit einer Austrittsgeschwindigkeit von 5,0 m/min aus und wurde mit dem Dreifachen der Austrittsgeschwindigkeit abgezogen und im Fällbad in Querrichtung um 50% verstreckt.

Die erhaltene Flachfolie wies folgende Eigenschaften auf:

| | |
|---|---|
| Breite | 55,0 cm |

(fortgesetzt)

| Dicke | 33,0 μm |
|---|---|
| Festigkeit (längs) | 151,3 N/mm$^2$ |
| Festigkeit (quer) | 135,6 N/mm$^2$ |
| Längsdehnung | 16,4% |
| Querdehnung | 37,3 % |
| UFR | 4,7 ml/mm$^2$.h.mm Hg |
| $P_{diff}$ NaOH | 2,6.10$^{-3}$ cm/min |
| $P_{diff}$ NaCl | 2,4.10$^{-3}$ cm/min |

Beispiel 20

Eine Celluloselösung mit einer Temperatur von 85° C, enthaltend 14,2 Masse% Cellulose, 76,3 Masse% NMMO und 9,5 Masse% Wasser, wurde mittels einer länglichen Extrusionsdüse, welche einen Extrusionsspalt mit einer Länge von 40 cm und einer Breite von 500 μm aufwies, mit einem Durchsatz von 75,6 kg/h durch einen Luftspalt von 1 cm senkrecht nach unten in ein Fällbad, bestehend aus 98 Masse% Wasser und 2 Masse% NMMO, extrudiert.

Die folienartig ausgeformte Celluloselösung trat aus der Düse mit einer Austrittsgeschwindigkeit von 5,0 m/min aus und wurde mit der gleichen Geschwindigkeit abgezogen. Nach dem Fällbad wurde die Flachfolie in Querrichtung um 100% verstreckt.

Die erhaltene Flachfolie wies folgende Eigenschaften auf:

| Breite | 74,0 cm |
|---|---|
| Dicke | 45,0 μm |
| Festigkeit (längs) | 119,1 N/mm$^2$ |
| Festigkeit (quer) | 184,6 N/mm$^2$ |
| Längsdehnung | 42,0 % |
| Querdehnung | 32,0 % |
| UFR | 6,1 ml/mm$^2$.h.mm Hg |
| $P_{diff}$ NaOH | 5,7.10$^{-3}$ cm/min |
| $P_{diff}$ NaCl | 4,8.10$^{-3}$ cm/min |

**Patentansprüche**

1. Verfahren zur Herstellung cellulosischer Flachfolien und cellulosischer Membranen in Form von Flachmembranen, wobei eine Lösung von Cellulose in einem wässerigen tertiären Aminoxid mittels einer Extrusionsdüse, die einen länglichen Extrusionsspalt mit einer Länge von mindestens 40 cm aufweist, folienartig ausgeformt und durch einen Luftspalt in ein Fällbad geführt wird, wobei im Fällbad die cellulosische Flachfolie gebildet wird, **dadurch gekennzeichnet, daß** die cellulosische Flachfolie nach dem Eintritt in das Fällbad querverstreckt wird, mit der Maßgabe, daß die cellulosische Flachfolie während des Querverstreckens nicht zerstört wird.

2. Verfahren nach Anspruch 1, **dadurch gekennzeichnet, daß** die cellulosische Flachfolie im Luftspalt längsverstreckt wird, vorzugsweise in einem Bereich von 0,2- bis 5-fach.

3. Verfahren nach Anspruch 1 oder 2, **dadurch gekennzeichnet, daß** die cellulosische Flachfolie nach dem Fällen gewaschen und nach dem Waschen verstreckt wird.

4. Verfahren nach Anspruch 1 oder 2, **dadurch gekennzeichnet, daß** die cellulosische Flachfolie nach dem Fällen gewaschen und getrocknet wird und daß die trockene cellulosische Flachfolie befeuchtet und verstreckt wird.

5. Verfahren nach einem der Ansprüche 1 bis 4, **dadurch gekennzeichnet, daß** die cellulosische Flachfolie bis zum 3,5-fachen querverstreckt wird.

6. Verfahren nach einem der Ansprüche 1 bis 5, **dadurch gekennzeichnet, daß** als tertiäres Aminoxid N-Methylmorpholin-N-oxid eingesetzt wird.

7. Verfahren nach einem der Ansprüch 1 bis 6, **dadurch gekennzeichnet, daß** die Folie, nach dem Fällen gewaschen und getrocknet wird, wobei die Folie während des Trocknens, Längs und quer fixiert wird.

8. Verfahren nach einem der Ansprüche 1 bis 7 zur Herstellung einer cellulosischen Membran, **dadurch gekennzeichnet, daß** die Permeabilität der Membran durch die Querverstreckung der Folie nach dem Eintritt in das Fällbad gesteuert wird.

9. Verwendung einer nach dem Verfahren gemäß einem der Ansprüche 1 bis 7 hergestellten cellulosischen Flachfolie als Verpackungsmaterial, insbesondere für Lebensmittel, als Material für Müllsäcke und Tragtaschen, als Agrarfolie, als Windelfolie, als Substrat für Verbunde, als Bürofolie, als Haushaltsfolie oder als Membran zur Auftrennung von Stoffgemischen.

**Claims**

1. A process for the manufacture of cellulosic flat films and cellulosic membranes in the form of flat membranes, wherein a solution of cellulose in an aqueous tertiary amine oxide is moulded in the manner of a film by means of an extrusion die having an oblong extrusion gap of a length of at least 40 cm and is conveyed through an air gap into a precipitation bath, with the cellulosic flat film being formed in the precipitation bath,
**characterized in that**
the cellulosic flat film is transversely stretched upon entering into the precipitation bath, with the proviso that the cellulosic flat film is not destroyed during transverse stretching.

2. A process according to claim 1, **characterized in that** the cellulosic flat film is longitudinally stretched in the air gap, preferably in a range of the 0.2- to the 5-fold.

3. A process according to claim 1 or 2, **characterized in that** the cellulosic flat film is washed after precipitation and stretched after washing.

4. A process according to claim 1 or 2, **characterized in that** the cellulosic flat film is washed and dried after precipitation and that the dry cellulosic flat film is moistened and stretched.

5. A process according to any of claims 1 to 4, **characterized in that** the cellulosic flat film is transversely stretched up to the 3.5-fold.

6. A process according to any of claims 1 to 5, **characterized in that** N-methylmorpholine-N-oxide is used as the tertiary amine oxide.

7. A process according to any of claims 1 to 6, **characterized in that** the film is washed and dried after precipitation, with the film being longitudinally and transversely fixed during drying.

8. A process according to any of claims 1 to 7 for the manufacture of a cellulosic membrane, **characterized in that** the permeability of the membrane is controlled by the transverse stretching of the film upon entering into the precipitation bath.

9. The use of a cellulosic flat film produced in accordance with the process according to any of claims 1 to 7 as a packaging material, in particular for foodstuffs, as a material for garbage bags and carrier bags, as an agricultural film, as a film for diapers, as a substrate for compounds, as a film for office use, as a film for household use, or as a membrane for the separation of material mixtures.

**Revendications**

1. Procédé de fabrication de films cellulosiques plats et de membranes cellulosiques sous la forme de membranes plates, dans lequel une solution de cellulose dans un aminoxyde tertiaire aqueux est transformée en film au moyen d'une buse d'extrusion présentant une fente d'extrusion oblongue d'au moins 40 cm de longueur et guidée par une lame d'air dans un bain de précipitation, le film cellulosique plat étant formé dans le bain de précipitation, **caractérisé en ce que** le film cellulosique plat est étiré transversalement après l'entrée dans le bain de précipitation, à la condition que le film cellulosique plat ne soit pas détruit au cours de l'étirage transversal.

2. Procédé selon la revendication 1, **caractérisé en ce que** le film cellulosique plat est étiré en longueur dans la lame d'air, de préférence dans une plage de 0,2 à 5 fois.

3. Procédé selon la revendication 1 ou la revendication 2, **caractérisé en ce que** le film cellulosique plat est lavé après la précipitation et étiré après le lavage.

4. Procédé selon la revendication 1 ou la revendication 2, **caractérisé en ce que** le film cellulosique plat est lavé et séché après la précipitation et **en ce que** le film cellulosique plat sec est humecté et étiré.

5. Procédé selon l'une des revendications 1 à 4, **caractérisé en ce que** le film cellulosique plat est étiré transversalement jusqu'à 3,5 fois sa largeur.

6. Procédé selon l'une des revendications 1 à 5, **caractérisé en ce que** l'aminoxyde tertiaire utilisé est le N-oxyde de N-méthylmorpholine.

7. Procédé selon l'une des revendications 1 à 6, **caractérisé en ce que** le film est lavé et séché après la précipitation, le film étant fixé longitudinalement et transversalement pendant le séchage.

8. Procédé selon l'une des revendications 1 à 7 pour fabriquer une membrane cellulosique, **caractérisé en ce que** la perméabilité de la membrane est contrôlée par l'étirage transversal du film après l'entrée dans le bain de précipitation.

9. Utilisation d'un film cellulosique plat obtenu par un procédé selon l'une des revendications 1 à 7 comme matériau d'emballage, en particulier pour des produits alimentaires, comme matériau pour des sacs poubelles et des poches de transport, comme film agricole, comme film de banderolage, comme substrat pour des composites, comme film de bureau, comme film de ménage ou comme membrane pour la séparation de mélanges de substances.